# EUROPÄISCHE PATENTSCHRIFT

(11) **EP 1 760 840 B1**
(45) Veröffentlichungstag und Bekanntmachung des Hinweises auf die Patenterteilung: **26.11.2008**
(21) Anmeldenummer: 05019340.8
(22) Anmeldetag: 06.09.2005
(51) Int. Cl.: H01R 13/627, B60N 2/48

(54) **Elektrischer Steckverbinder und Sitz mit einem solchen Steckverbinder**
Electrical connector and seat with such an connector
Connecteur électrique et siège ayant un tel connecteur

(43) Veröffentlichungstag der Anmeldung: 07.03.2007
(73) Patentinhaber: ODU- Steckverbindungssysteme GmbH & Co. KG, 84453 Mühldorf a. Inn (DE)
(72) Erfinder: Weigand, Josef, 84431 Heldenstein (DE); Franzl, Stefan, 84513 Töging (DE)
(74) Vertreter: Leinweber & Zimmermann

(56) Entgegenhaltungen:
- EP-A- 0 911 211
- EP-A- 0 994 531
- DE-B3-5102004 007 32

## Beschreibung

Die Erfindung betrifft einen elektrischen Steckverbinder mit einem ersten Steckteil, einem zu dem ersten Steckteil passenden zweiten Steckteil und einer ersten Halterung für den ersten Steckteil, wobei zum Zusammenstecken des ersten mit dem zweiten Steckteil eine Steckkraft aufgebracht werden muß.

Ein solcher Steckverbinder ist beispielsweise bekannt aus der EP 0 988 172 B1, wo er dazu dient, elektrische Signale an eine elektrische Einrichtung in einer Kopfstütze eines Fahrzeugsitzes zu übertragen. Dabei ist die erste Halterung von einem Rohr mit Radialfortsätzen in der Rückenlehne gebildet, das bei eingesetzter Kopfstütze den ersten Steckteil in Richtung des zweiten Steckteils vorspannt. Wird die Kopfstütze abgesenkt, d.h. wird ein Holm der Kopfstütze in die Rückenlehne eingefahren, so wird die Feder komprimiert, damit der erste Steckteil mit dem zweiten Steckteil zusammen innerhalb der Rückenlehne verschoben werden kann. Dabei wird in jeder Betriebsposition der erste Steckteil von der ersten Halterung, d.h. von dem Rohr mit den Radialfortsätzen und der Feder gehalten. Wird der Holm der Kopfstütze aus der Rückenlehne herausgezogen, so wird die Steckverbindung getrennt. Der erste Steckteil verbleibt in der Rückenlehne, während der zweite Steckteil zusammen mit dem Holm der Kopfstütze herausgezogen wird.

Das Rohr, die Radialfortsätze und die Feder müssen in der Rückenlehne geeignet geführt sein, damit sie nicht verkanten und sich gegebenenfalls festsetzen.

Ein solcher Steckverbinder ist auch in der EP 0 911 211, die als nächstliegender Stand der Technik angesehen wird, beschrieben.

Es ist Aufgabe der Erfindung, den Steckverbinder der eingangs genannten Art derart weiterzubilden, daß er verläßlicher funktioniert.

Erfindungsgemäß wird die gestellte Aufgabe durch das kennzeichnende Teil des Anspruchs 1 gelöst.

Dabei liegt der Erfindung die verblüffend einfache Erkenntnis zugrunde, daß der erste Steckteil dann, wenn er durch Stecken mit dem zweiten Steckteil zum Ausbilden einer elektrischen Verbindung zusammengesteckt ist, von dem zweiten Steckteil ausreichend gehalten ist, so daß es der ersten Halterung nach Schließen der elektrischen Verbindung nicht mehr bedarf. Es muß nur gewährleistet sein, daß das Zusammenstecken des ersten mit dem zweiten Steckteil erfolgt, bevor der erste Steckteil von der Halterung gelöst wird. Deshalb muß diejenige Kraft, die zum Lösen des ersten Steckteils von der ersten Halterung erforderlich ist, größer sein als die Steckkraft.

Da der erste Steckteil nach dem Ausbilden der elektrischen Verbindung durch Zusammenstecken mit dem zweiten Steckteil von der ersten Halterung gelöst ist, bedarf es keiner Mitbewegung der ersten Halterung bei einem Bewegen der beiden Steckteile, weshalb ein Verklemmen der Halterung oder eines ihrer Teile ausgeschlossen ist und sicherlich das Funktionieren der Steckverbindung nicht beeinträchtigen kann.

Nach einer bevorzugten Ausführungsform der Erfindung ist vorgesehen, daß die Steckkraft und die Lösekraft die gleiche Richtung haben.

Dadurch kann das Herstellen der Steck- und damit der elektrischen Verbindung mit dem Ablösen des ersten Steckteils von der ersten Halterung einhergehen. Da allerdings die Lösekraft größer als die Steckkraft ist, wird sich der erste Steckteil erst nach dem Herstellen der Steckverbindung von der ersten Halterung lösen.

Erfindungsgemäß weiter bevorzugt ist vorgesehen, daß zum Trennen des ersten von dem zweiten Steckteil eine Trennkraft aufgebracht werden muß, zum Anbringen des ersten Steckteils an der ersten Halterung eine Anbringkraft aufgebracht werden muß und die Trennkraft größer als die Anbringkraft ist.

Durch diese Ausgestaltung ist sichergestellt, daß die Steckverbindung, die nach dem Lösen des ersten Steckteils von der ersten Halterung der einzige Halt des ersten Steckteils ist, erst dann getrennt wird, wenn der erste Steckteil (wieder) an der ersten Halterung angebracht ist.

Wiederum ist es dabei erfindungsgemäß bevorzugt, daß die Trennkraft und die Anbringkraft die gleiche Richtung haben.

Dadurch kann das Anbringen des ersten Steckteils an der ersten Halterung einhergehen mit dem Trennen der elektrischen Verbindung bzw. dem Trennen unmittelbar vorhergehen.

Erfindungsgemäß weiter bevorzugt ist eine ein- und ausschaltbare Einrichtung zum Sichern des ersten und des zweiten Steckteils gegen Trennen vorgesehen.

Dadurch wird die elektrische Verbindung der beiden Steckteile miteinander besonders verläßlich, was angesichts der Tatsache wichtig ist, daß der zweite Steckteil nach dem Ablösen des ersten Steckteils von der ersten Halterung den einzigen Halt des ersten Steckteils darstellt.

Dabei spricht die Sicherungseinrichtung erfindungsgemäß weiter bevorzugt
auf ein Anbringen des ersten Steckteils an der ersten Halterung durch Ausschalten und/oder
auf ein Lösen des ersten Steckteils von der ersten Halterung durch Einschalten an.

Mit anderen Worten ist es nach dieser Ausgestaltung der Erfindung nicht erforderlich, die Sicherungseinrichtung gesondert zu betätigen. Vielmehr geschieht dies automatisch durch Anbringen/Lösen des ersten Steckteils an der ersten Halterung.

Als mechanisch besonders einfach ist es erfindungsgemäß weiter bevorzugt vorgesehen, daß die Sicherungseinrichtung in ausgeschaltetem Zustand auf ein Verstellen des zweiten Steckteils und/oder einer den ersten Steckteil haltenden zweiten Halterung bezüglich des ersten Steckteils im Sinne eines Trennens des ersten von dem zweiten Steckteil anspricht, indem sie eine Verrastung löst.

Das Herstellen und Lösen einer Verrastung ist nämlich besonders einfach.

Weiter bevorzugt ist erfindungsgemäß vorgesehen, daß die Sicherungseinrichtung eine bezüglich des zweiten Steckteils und/oder bezüglich einer den zweiten Steckteil haltenden zweiten Halterung verstellbare und zum Ausschalten der Sicherungseinrichtung mit der ersten Halterung zusammenwirkende Schalteinrichtung aufweist.

Wenn nämlich die Schalteinrichtung mit der ersten Halterung zusammenwirkt, kann auf besonders einfache Weise die Sicherungseinrichtung ausgeschaltet werden, indem der erste Steckteil an der ersten Halterung angebracht wird.

Nach einer als besonders einfach bevorzugten Ausführungsform der Erfindung ist dabei vorgesehen, daß die Schalteinrichtung einen Anschlag zum Anschlagen an der ersten Halterung aufweist.

Die Schalteinrichtung ist dabei erfindungsgemäß bevorzugt zumindest teilweise hülsenförmig.

Zu der Sicherungseinrichtung gehört erfindungsgemäß weiter bevorzugt eine erste Rastklinke, weil dies eine mechanisch besonders einfache Ausgestaltung darstellt.

Als ebenfalls mechanisch besonders einfach ist es dabei erfindungsgemäß weiter bevorzugt, daß die erste Rastklinke elastisch verstellbar ist.

Dabei weist nach einer besonders bevorzugten Ausführungsform der Erfindung die erste Rastklinke eine schräg angestellte Flanke auf, deren Anstellwinkel die Steckkraft beeinflußt.

Durch diese Ausgestaltung ist es besonders einfach, die Steckkraft so einzustellen, daß sie größer als die Lösekraft ist.

Die erste Rastklinke weist dabei erfindungsgemäß weiter bevorzugt eine quer zur Richtung einer Lösekraft liegende Flanke auf.

Diese Flanke ist mithin nicht mehr einfach durch Auseinanderziehen der beiden Steckteile in Axialrichtung überwindbar, wie dies bei der schräg angestellten Flanke im Zusammenhang mit dem Herstellen der Steckverbindung durch axiales Zusammenschieben der Fall ist. Dadurch ist eine besonders sichere Verbindung der beiden Steckteile gewährleistet.

Erfindungsgemäß weiter bevorzugt weist die erste Halterung eine zweite Rastklinke auf, die insbesondere elastisch verstellbar ist.

Auch die zweite Rastklinke kann eine erste schräg angestellte Flanke aufweisen, deren Anstellwinkel die Lösekraft beeinflußt. Wiederum gilt, daß es dadurch besonders einfach ist, die Lösekraft größer als die Steckkraft auszugestalten.

Darüber hinaus kann die zweite Rastklinke eine zweite schräg angestellte Flanke aufweisen, deren Anstellwinkel eine Anbringkraft beeinflußt.

Dadurch ist es besonders einfach, die Anbringkraft derart einzustellen, daß sie kleiner als die Trennkraft ist.

Der erfindungsgemäße Steckverbinder dient erfindungsgemäß bevorzugt dazu, elektrische Signale an eine elektrische Einrichtung in einer Kopfstütze, insbesondere eines Fahrzeugsitzes, zu übertragen.

Selbstverständlich sind aber auch andere Anwendungsgebiete denkbar, bei denen unzugängliche Steckteile nach dem Zusammenstecken verschoben werden müssen.

Die erste Halterung kann dabei an einer Lehne oder einer Kopfstütze, insbesondere eines Fahrzeugsitzes, anbringbar sein.

Ferner kann die zweite Halterung an einem Holm einer Kopfstütze, insbesondere eines Fahrzeugsitzes, ausgebildet oder daran anbringbar sein.

Schließlich schafft die Erfindung auch einen Sitz, insbesondere einen Fahrzeugsitz, mit einem Steckverbinder der oben im einzelnen beschriebenen Art.

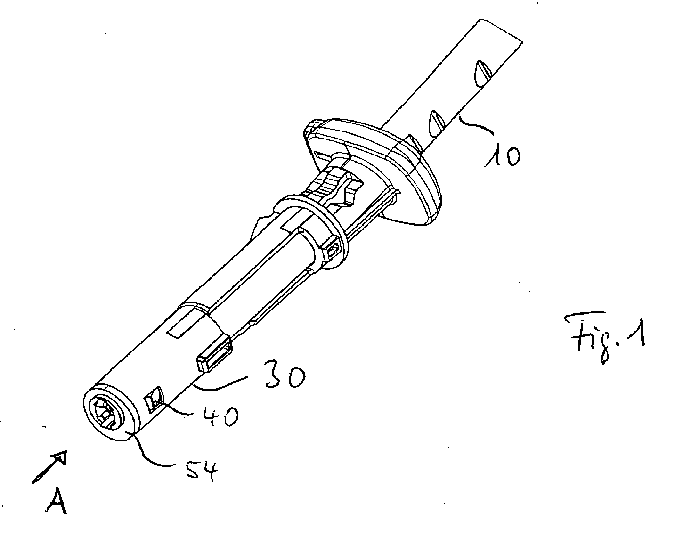

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische perspektivische Ansicht eines Steckverbinders nach einem bevorzugten Ausführungsbeispiel der Erfindung,

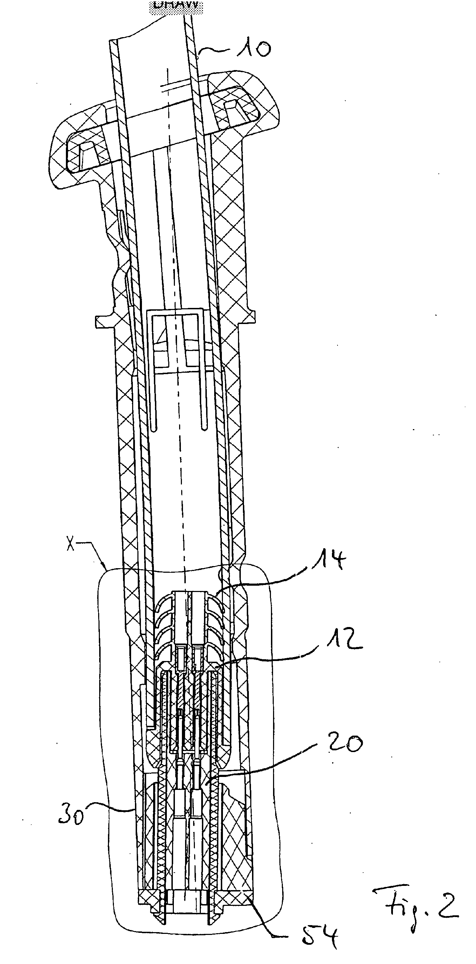

- Figur 2: eine Längsschnittansicht des Steckverbinders nach Figur 1,

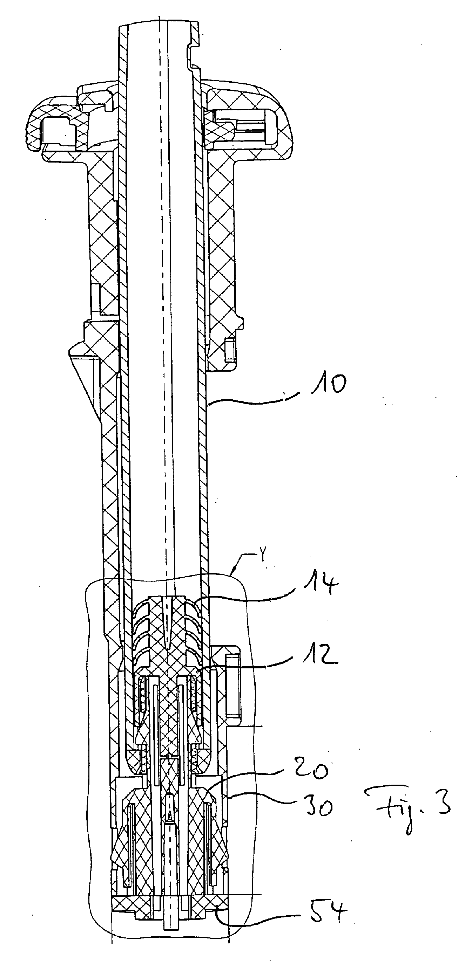

- Figur 3: eine gegenüber der Längsschnittansicht nach Figur 2 um 90° gedrehte Längsschnittansicht des Steckverbinders nach Figur 1,

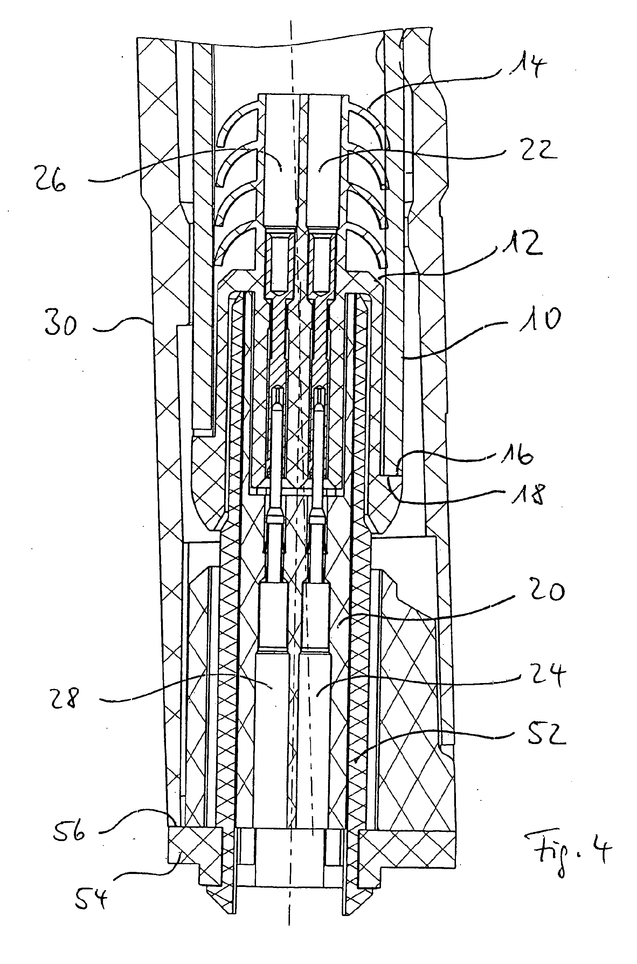

- Figur 4: die Detailansicht "X" aus Figur 2 in vergrößertem Maßstab,
- Figur 5: die Detailansicht "Y" aus Figur 3 in vergrößertem Maßstab, und

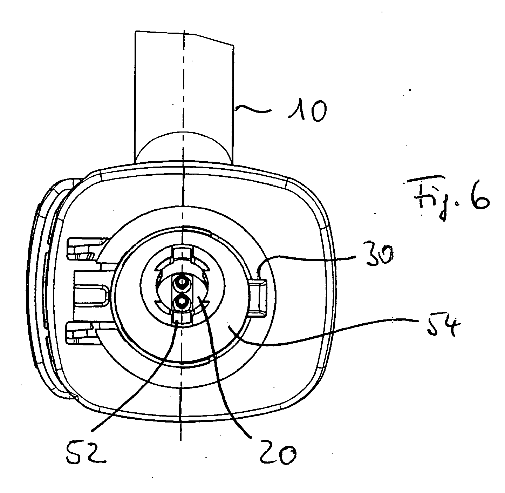

- Figur 6: eine Ansicht in Richtung des Pfeils "A" in Figur 1.

Bei dem in der Zeichnung dargestellten Ausführungsbeispiel handelt es sich um einen elektrischen Steckverbinder, der im Zusammenhang mit einer Kopfstütze eines Fahrzeugsitzes verwendet wird.

Die Zeichnung zeigt einen Holm 10 der Kopfstütze. Der Holm 10 ist hohl. An seinem freien Ende ist ein zweiter Steckteil 12 in den Holm 10 eingesteckt. Rippen, von denen eine beispielhaft mit der Bezugszahl 14 bezeichnet ist, und die wie Widerhaken wirken, halten den zweiten Steckteil 12 in dem Holm 10. Der zweite Steckteil 12 stützt sich mit einem Anschlag 16 an einem entsprechenden Anschlag 18 des Holms 10 ab.

Ferner ist in der Zeichnung ein erster Steckteil 20 zu sehen, der mit dem zweiten Steckteil 12 zusammengesteckt ist. In zusammengestecktem Zustand wird eine elektrische Verbindung etabliert, und zwar zwischen (in der Zeichnung nicht dargestellten) Leitungen, die über Kanäle 22, 24 bzw. 26, 28 in die beiden Steckteile eingeführt und darin elektrisch angeschlossen werden.

Mit der Bezugszahl 30 ist ein Einsatz bezeichnet, der beispielsweise in die Lehne eines Fahrzeugsitzes eingesetzt werden kann und zum verschieblichen Halten des Holmes 10 der Kopfstütze dient.

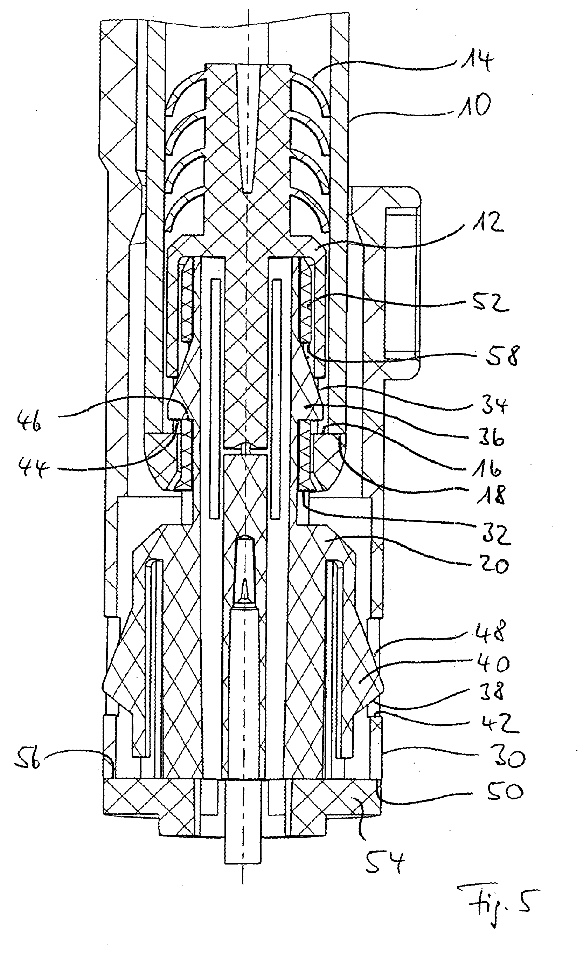

Wie der Zeichnung zu entnehmen ist, dient bei dem dargestellten Ausführungsbeispiel der Holm 10 als Halterung für den zweiten Steckteil 12. Demgegenüber dient insbesondere in dem in Figur 5 dargestellten Betriebszustand der Einsatz 30 als Halterung für den zweiten Steckteil 20. Darüber hinaus ist bei der Darstellung nach Figur 5 der erste Steckteil 20 auch von dem zweiten Steckteil 12 gehalten, weil die beiden Steckteile zum Herstellen der elektrischen Verbindung ineinandergesteckt sind.

Im folgenden ist die Funktionsweise des erfindungsgemäßen Steckverbinders beschrieben:

Wenngleich dieser Zustand in der Zeichnung nicht dargestellt ist, wird in der folgenden Beschreibung davon ausgegangen, daß die Kopfstütze von der Rückenlehne demontiert ist. Mit anderen Worten befindet sich der Holm 10 mit dem zweiten Steckteil 12 außerhalb des Einsatzes 30. Demgegenüber befindet sich in diesem Zustand der erste Steckteil 20 innerhalb des Einsatzes 30, und zwar in der in Figur 5 gezeigten Stellung.

Wird nun der Holm 10 mit dem daran gehaltenen zweiten Steckteil 12 zum Montieren der Kopfstütze in den Einsatz 30 eingeschoben, so trifft ein Anschlag 32 auf eine schräge Flanke 34 einer Rastklinke 36. Mit zunehmender Kopplung der beiden Steckteile 12 und 20 wird auch der erste Steckteil 20 innerhalb des Einsatzes 30 in Figur 5 nach unten bewegt, bis eine schräge Flanke 38 einer Rastklinke 40 an einem Anschlag 42 anschlägt.

Beide Rastklinken 36 und 40 sind gegen eine elastische Rückstellkraft nach radial innen verstellbar.

Da aber die Flanke 38 der Rastklinke 40 steiler als die Flanke 34 der Rastklinke 36 ist, wird der Anschlag 32 eher über die Rastklinke 36 fahren als der Anschlag 42 über die Rastklinke 40. Mit anderen Worten ist die Steckkraft, also diejenige Kraft, die zum Ineinanderstecken der beiden Steckteile 12 und 20 erforderlich ist, größer als die Lösekraft, also diejenige Kraft, die erforderlich ist, um den ersten Steckteil 20 aus dem Einsatz 30 zu lösen.

Daher ist folgendes gewährleistet: Wird der Holm 10 mit dem davon gehaltenen zweiten Steckteil 12 nach dem Einrasten der Rastklinke 36 in Figur 5 weiter nach unten gefahren, so wird zwar der erste Steckteil 20 aus dem Einsatz 30 gelöst, statt dessen aber von dem zweiten Steckteil 12 und damit von dem Holm 10 gehalten.

Die Kopfstütze kann also weiter nach unten gefahren werden. Der erste Steckteil 20 muß nicht mehr von dem Einsatz 30 gehalten werden und muß auch nicht in einer Führung oder dergleichen laufen, so daß ein Verklemmen, Verkanten oder ähnliches ausgeschlossen ist.

Der erste Steckteil 20 ist verläßlich an dem zweiten Steckteil 12 gehalten, weil die Rastklinke 36 eine Steilflanke 44 aufweist, die in zusammengestecktem Zustand an einem Anschlag 46 anschlägt. Sofern der erste Steckteil 20 aus dem Einsatz 30 gelöst ist, führt daher selbst ein axial ausgeübter Zug an dem zweiten Steckteil 12 einerseits und dem ersten Steckteil 20 andererseits nicht zu einem Trennen der Steckverbindung.

Soll die Kopfstütze wieder demontiert werden, so wird sie nach oben gezogen, so daß sich auch der Holm 10 in dem Einsatz 30 nach oben bewegt.

Gelangt der erste Steckteil 20 in den Bereich des unteren Endes des Einsatzes 30, so schlägt zunächst eine Flanke 48 der Rastklinke 40 an einem Anschlag 50 des Einsatzes 30 an. Dabei bestimmt die Steilheit der Flanke 48 die Anbringkraft, d.h diejenige Kraft, die zum Verrasten der Rastklinke 40 und damit zum Anbringen des ersten Steckteils 20 an dem Einsatz 30 erforderlich ist. Diese Anbringkraft ist kleiner als die durch die Steilflanke 44 bestimmte Trennkraft, also diejenige Kraft, die erforderlich ist, um den zweiten Steckteil 12 von dem ersten Steckteil 20 zu trennen. Ein Hinaufziehen der Kopfstütze wird also in jedem Fall zu einem Verrasten der Rastklinke 40 und damit zu einem verläßlichen Anbringen des ersten Steckteils 20 an dem Einsatz 30 führen.

Damit ist wieder der Zustand nach Figur 5 erreicht.

Wird die Kopfstütze nun weiter hinaufgezogen, so schlägt der Anschlag 16 an der Steilflanke 44 an. Ein weiteres Heraufziehen der Kopfstütze führt zu einem Mitnehmen der Rastklinke 36, so daß sich auch die Rastklinke 36 in Figur 5 aufwärts bewegt. Demgegenüber wird eine Steuerhülse 52 nicht mit nach oben bewegt, weil sie an ihrem unteren Ende mit einem Ring 54 versehen ist, der mit einem Anschlag 56 an dem Anschlag 50 anschlägt.

Wie beim Zusammenstecken des zweiten Steckteils 12 mit dem ersten Steckteil 20 wird bei einem Weiterbewegen der Kopfstütze in Figur 5 nach oben die Rastklinke 36 gegen ihre elastische Rückstellkraft nach radial innen verstellt, weil sie mit ihrer Flanke 34 gegen einen Anschlag 58 an der Steuerhülse 52 läuft.

Ein Weiterbewegen führt zu einem Lösen der Verrastung durch die Rastklinke 36, so daß der zweite Steckteil 12 von dem ersten Steckteil 20 getrennt werden kann. Daher kann der Holm 10 mit dem zweiten Steckteil 12 aus dem Einsatz 30 herausgezogen werden. Der erste Steckteil 20 ist verläßlich in dem Einsatz 30 gehalten.

Wie die obigen Ausführungen zeigen, stellt die Steuerhülse 52 im Zusammenspiel mit der Rastklinke 36 eine Sicherungseinrichtung gegen ein Trennen der Verbindung des zweiten Steckteils 12 mit dem ersten Steckteil 20 dar, solange die Steuerhülse 52 nicht über den Anschlag 56 an dem Einsatz 30 anliegt, d.h. solange der erste Steckteil 20 sich nicht in dem Einsatz 30 befindet. Ist demgegenüber der erste Steckteil 20 an dem Einsatz 30 angebracht, so ist die von der Steuerhülse 52 und der Rastklinke 36 gebildete Sicherungseinrichtung quasi "ausgeschaltet", so daß ein einfaches Herausziehen des Holmes 10 zu einem Trennen der Verbindung zwischen dem zweiten Steckteil 12 und dem ersten Steckteil 20 führt. Durch Lösen des ersten Steckteils 20 aus dem Einsatz 30, d.h. durch einfaches Hinabschieben der Kopfstütze und damit des Holms 10, wird hingegen die genannte Sicherungseinrichtung wieder eingeschaltet.

Bei dem in der Zeichnung dargestellten Ausführungsbeispiel haben die Steckkraft und die Lösekraft beide die gleiche Richtung, nämlich beispielsweise in Figur 5 nach unten. Ferner haben die Trennkraft und die Anbringkraft die gleiche Richtung, nämlich beispielsweise in Figur 5 nach oben. Dadurch können das Zusammenstecken der beiden Steckteile 12 und 20 sowie das Lösen des ersten Steckteils 20 aus dem Einsatz 30 einerseits und das Anbringen des ersten Steckteils 20 an dem Einsatz 30 und das Trennen der beiden Steckteile 12 und 20 voneinander andererseits jeweils in einem Arbeitsgang ausgeführt werden, nämlich einfach durch Einstecken bzw. Herausziehen des Holms 10 in den bzw. aus dem Einsatz 30.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Elektrischer Steckverbinder mit
einem ersten Steckteil (20),
einem zu dem ersten Steckteil (20) passenden zweiten Steckteil (12) und
einer ersten Halterung (30, 40) für den ersten Steckteil (20),
wobei zum Zusammenstecken des ersten Steckteils (20) mit dem zweiten Steckteil (12) eine Steckkraft aufgebracht werden muß, wobei
die erste Halterung (30, 40) den ersten Steckteil (20) lösbar hält und zum Lösen des ersten Steckteils (20) von der ersten Halterung (30, 40) eine Lösekraft aufgebracht werden muß, die größer ist als die Steckkraft,
**gekennzeichnet durch**
eine ein- und ausschaltbare Einrichtung (36, 52) zum Sichern des ersten und des zweiten Steckteils (20, 12) gegen Trennen, die
auf ein Anbringen des ersten Steckteils (20) an der ersten Halterung (30, 40) **durch** Ausschalten und/oder
auf ein Lösen des ersten Steckteils (20) von der ersten Halterung (30, 40) **durch** Einschalten anspricht.

2. Steckverbinder nach Anspruch 1, **dadurch gekennzeichnet, daß** die Steckkraft und die Lösekraft die gleiche Richtung haben.

3. Steckverbinder nach Anspruch 1 oder 2, **dadurch gekennzeichnet, daß**
zum Trennen des ersten Steckteils (20) von dem zweiten Steckteil (12) eine Trennkraft aufgebracht werden muß,
zum Anbringen des ersten Steckteils (20) an der ersten Halterung (30, 40) eine Anbringkraft aufgebracht werden muß und
die Trennkraft größer ist als die Anbringkraft.

4. Steckverbinder nach Anspruch 3, **dadurch gekennzeichnet, daß** die Trennkraft und die Anbringkraft die gleiche Richtung haben.

5. Steckverbinder nach einem der vorangehenden Ansprüche, **dadurch gekennzeichnet, daß** die Sicherungseinrichtung (36, 52) in ausgeschaltetem Zustand auf ein Verstellen des zweiten Steckteils (12) und/oder einer den zweiten Steckteil (12) haltenden zweiten Halterung (10) bezüglich des ersten Steckteils (20) im Sinne eines Trennens des ersten Steckteils (20) von dem zweiten Steckteil (12) anspricht, indem sie eine Verrastung (44, 46) löst.

6. Steckverbinder nach einem der vorangehenden Ansprüche, **dadurch gekennzeichnet, daß** die Sicherungseinrichtung (36, 52) eine bezüglich des zweiten Steckteils (12) und/oder bezüglich einer den zweiten Steckteil (12) haltenden zweiten Halterung (10) verstellbare und zum Ausschalten der Sicherungseinrichtung (36, 52) mit der ersten Halterung (30, 40) zusammenwirkende Schalteinrichtung (52, 54) aufweist.

7. Steckverbinder nach Anspruch 6, **dadurch gekennzeichnet, daß** die Schalteinrichtung (52, 54) einen Anschlag (56) zum Anschlagen an der ersten Halterung (30, 40) aufweist.

8. Steckverbinder nach Anspruch 6 oder 7, **dadurch gekennzeichnet, daß** die Schalteinrichtung (52, 54) zumindest teilweise hülsenförmig ist.

9. Steckverbinder nach einem der vorangehenden Ansprüche, **dadurch gekennzeichnet, daß** die Sicherungseinrichtung (36, 52) eine erste Rastklinke (36) aufweist.

10. Steckverbinder nach Anspruch 9, **dadurch gekennzeichnet, daß** die Rastklinke (36) elastisch verstellbar ist.

11. Steckverbinder nach Anspruch 9 oder 10, **dadurch gekennzeichnet, daß** die erste Rastklinke (36) eine schräg angestellte Flanke (34) aufweist, deren Anstellwinkel die Steckkraft beeinflußt.

12. Steckverbinder nach einem der Ansprüche 9 bis 11, **dadurch gekennzeichnet, daß** die erste Rastklinke (36) eine quer zur Richtung einer Lösekraft liegende Flanke (44) aufweist.

13. Steckverbinder nach einem der vorangehenden Ansprüche, **dadurch gekennzeichnet, daß** die erste Halterung (30, 40) eine zweite Rastklinke (40) aufweist.

14. Steckverbinder nach Anspruch 13, **dadurch gekennzeichnet, daß** die zweite Rastklinke (40) elastisch verstellbar ist.

15. Steckverbinder nach Anspruch 13 oder 14, **dadurch gekennzeichnet, daß** die zweite Rastklinke (40) eine erste schräg angestellte Flanke (38) aufweist, deren Anstellwinkel die Lösekraft beeinflußt.

16. Steckverbinder nach einem der Ansprüche 13 bis 15, **dadurch gekennzeichnet, daß** die zweite Rastklinke (40) eine zweite schräg angestellte Flanke (48) aufweist, deren Anstellwinkel eine Anbringkraft beeinflußt.

17. Steckverbinder nach einem der vorangehenden Ansprüche, **dadurch gekennzeichnet, daß** er dazu dient, elektrische Signale an eine elektrische Einrichtung in einer Kopfstütze, insbesondere eines Fahrzeugsitzes, zu übertragen.

18. Steckverbinder nach einem der vorangehenden Ansprüche, **dadurch gekennzeichnet, daß** die erste Halterung (30, 40) an einer Lehne oder einer Kopfstütze, insbesondere eines Fahrzeugsitzes, anbringbar ist.

19. Steckverbinder nach einem der vorangehenden Ansprüche, **dadurch gekennzeichnet, daß** die zweite Halterung (10) an einem Holm einer Kopfstütze, insbesondere eines Fahrzeugsitzes, ausgebildet oder anbringbar ist.

20. Sitz, insbesondere Fahrzeugsitz, mit einem Steckverbinder nach einem der vorangehenden Ansprüche.

## Claims

1. Electric plug connector with
a first plug part (20),
a second plug part (12) to fit the first plug part (20) and
a first holder (30, 40) for the first plug part (20),
whereby a plug-in force must be applied for plugging the first plug part (20) together with the second plug part (12), whereby
the first holder (30, 40) disconnectably holds the first plug part (20) and a disconnecting force that is greater than the plug-in force must be applied for disconnecting the first plug part (20) from the first holder (30, 40),
**characterised in that**
a means (36, 52) that can be switched on or off for securing the first and the second plug part (20, 12) against disconnection, reacts
upon inserting of the first plug part (20) into the first holder (30, 40) by switching off and/or
upon disconnecting the first plug part (20) from the first holder (30, 40) by switching on.

2. Plug connector according to Claim 1, **characterised in that** the plug-in force and the disconnecting force have the same direction.

3. Plug connector according to Claim 1 or 2, **characterised in that**
a disconnecting force must be applied for separating the first plug part (20) from the second plug part (12),
a plug-in force must be applied to insert the first plug part (20) into the first holder (30, 40) and
the disconnecting force is greater than the plug-in force.

4. Plug connector according to Claim 3, **characterised in that** the disconnecting force and the plug-in force have the same direction.

5. Plug connector according to one of the preceding Claims, **characterised in that** in the switched off state the securing means (36, 52) reacts to a displacement of the second plug part (12) and/or the second holder (10) holding the second plug part (12) in relation to the first plug part (20) in terms of separating the first plug part (20) from the second plug part (12) while disconnecting an arresting means (44, 46).

6. Plug connector according to one of the preceding Claims, **characterised in that** the securing means (36, 52) comprises a switching means (52, 54) co-operating with the first holder (30, 40) for switching off the securing means (36, 52), adjustable in relation to the second plug part (12) and/or in relation to a second holder (10) holding the second plug part (12).

7. Plug connector according to Claim 6, **characterised in that** the switching means (52, 54) comprises an end stop (56) for abutting the first holder (30, 40).

8. Plug connector according to Claim 6 or 7, **characterised in that** the switching means (52, 54) is at least partially sleeve-shaped.

9. Plug connector according to one of the preceding Claims, **characterised in that** the securing means (36, 52) comprises a first arresting pawl (36).

10. Plug connector according to Claim 9, **characterised in that** the arresting pawl (36) is elastically adjustable.

11. Plug connector according to Claim 9 or 10, **characterised in that** the first arresting pawl (36) comprises a diagonally positioned flank (34), the positioning angle of which affects the plug-in force.

12. Plug connector according to one of the Claims 9 to 11, **characterised in that** the first arresting pawl (36) comprises a flank (44) extending transverse to the direction of a disconnecting force.

13. Plug connector according to one of the preceding Claims, **characterised in that** the first holder (30, 40) comprises a second arresting pawl (40).

14. Plug connector according to Claim 13, **characterised in that** the second arresting pawl (40) is elastically adjustable.

15. Plug connector according to Claim 13 or 14, **characterised in that** the second arresting pawl (40) comprises a first diagonally positioned flank (38), the positioning angle of which affects the disconnecting force.

16. Plug connector according to one of the Claims 13 to 15, **characterised in that** the second arresting pawl (40) comprises a second diagonally positioned flank (48), the positioning angle of which affects a plug-in force.

17. Plug connector according to one of the preceding Claims, **characterised in that** the same serves to transmit electric signals to an electric means in a head support, in particular that of a vehicle seat.

18. Plug connector according to one of the preceding Claims, **characterised in that** the first holder (30, 40) can be affixed to a back rest or a head support, in particular those of a vehicle seat.

19. Plug connector according to one of the preceding Claims, **characterised in that** the second holder (10) is formed on or can be affixed to a rod of a head support, in particular that of a vehicle seat.

20. Seat, in particular a vehicle seat, with a plug connector according to one of the preceding Claims.

## Revendications

1. Connecteur électrique avec
une première partie de connecteur (20),
une deuxième partie de connecteur (12) adaptée à la première partie de connecteur (20) et
un premier logement (30, 40) pour la première partie de connecteur (20),
où pour l'assemblage de la première partie de connecteur (20) avec la deuxième partie de connecteur (12), une force d'assemblage doit être déployée, où,
le premier logement (30, 40) retient amoviblement la première partie de connecteur (20) et pour retirer la première partie de connecteur (20) du premier logement (30, 40), une force de retrait doit être déployée qui est plus grande que la force d'assemblage,
**caractérisé par**
une installation pouvant être mise en et hors service (36, 52) pour assurer les première et deuxième parties de connecteurs (20, 12) à l'encontre d'une séparation, qui
réagit à une application de la première partie de connecteur (20) au premier logement (30, 40) par mise hors service et/ou
à un retrait de la première partie de connecteur (20) du premier logement (30, 40) par une mise en service.

2. Connecteur selon la revendication 1, **caractérisé en ce que** la force d'assemblage et la force de retrait ont la même direction.

3. Connecteur selon la revendication 1 ou 2, **caractérisé en ce que**
pour la séparation de la première partie de connecteur (20) de la deuxième partie de connecteur (12) une force de séparation doit être déployée,
pour appliquer la première partie de connecteur (20) au premier logement (30, 40), une force d'application doit être déployée et
la force de séparation est plus grande que la force d'application.

4. Connecteur selon la revendication 3, **caractérisé en ce que** la force de séparation et la force d'application ont la même direction.

5. Connecteur selon l'une des revendications précédentes, **caractérisé en ce que** l'installation de sécurité (36, 52), à l'état hors service, lors d'un déplacement de la deuxième partie de connecteur (12) et/ou d'un deuxième logement (10) retenant la deuxième partie de connecteur (12) par rapport à la première partie de connecteur (20), réagit dans le sens d'une séparation de la première partie de connecteur (20) de la deuxième partie de connecteur (12), en libérant un encliquetage (44, 46).

6. Connecteur selon l'une des revendications précédentes, **caractérisé en ce que** l'installation de sécurité (36, 52) présente une installation de commutation (52, 54) ajustable par rapport à la deuxième partie de connecteur (12) et/ou par rapport à un deuxième logement (10) retenant la deuxième partie de connecteur (12) et coopérant, pour la mise hors service de l'installation de sécurité (36, 52), avec le premier logement (30, 40).

7. Connecteur selon la revendication 6, **caractérisé en ce que** l'installation de commutation (52, 54) présente une butée d'arrêt (56) pour la butée contre le premier logement (30, 40).

8. Connecteur selon la revendication 6 ou 7, **caractérisé en ce que** l'installation de commutation (52, 54) est au moins partiellement en forme de douille.

9. Connecteur selon l'une des revendications précédentes, **caractérisé en ce que** l'installation de sécurité (36, 52) présente un premier cliquet d'arrêt (36).

10. Connecteur selon la revendication 9, **caractérisé en ce que** le cliquet d'arrêt (36) est déplaçable élastiquement.

11. Connecteur selon la revendication 9 ou 10, **caractérisé en ce que** le premier cliquet d'arrêt (36) présente un flanc (34) appliqué en biais, dont l'angle d'application agit sur la force d'assemblage.

12. Connecteur selon l'une des revendications 9 à 11, **caractérisé en ce que** le premier cliquet d'arrêt (36) présente un flanc (44) s'étendant transversalement à la direction d'une force de retrait.

13. Connecteur selon l'une des revendications précédentes, **caractérisé en ce que** le premier logement (30, 40) présente un deuxième cliquet d'arrêt (40).

14. Connecteur selon la revendication 13, **caractérisé en ce que** le deuxième cliquet d'arrêt (40) est déplaçable élastiquement.

15. Connecteur selon la revendication 13 ou 14, **caractérisé en ce que** le deuxième cliquet d'arrêt (40) présente un premier flanc (38) appliqué en biais, dont l'angle d'application agit sur la force de retrait.

16. Connecteur selon l'une des revendications 13 à 15, **caractérisé en ce que** le deuxième cliquet d'arrêt (40) présente un deuxième flanc appliqué en biais (48) dont l'angle d'application agit sur une force d'application.

17. Connecteur selon l'une des revendications précédentes, **caractérisé en ce qu'**il sert à transmettre des signaux électriques à une installation électrique dans un appui-tête, en particulier d'un siège de véhicule.

18. Connecteur selon l'une des revendications précédentes, **caractérisé en ce que** le premier logement (30, 40) peut être appliqué à un accoudoir ou un appui-tête, en particulier d'un siège de véhicule.

19. Connecteur selon l'une des revendications précédentes, **caractérisé en ce que** le deuxième logement (10) est réalisé ou peut être appliqué à un longeron d'un appui-tête, en particulier d'un siège de véhicule.

20. Siège, en particulier siège de véhicule, avec un connecteur selon l'une quelconque des revendications précédentes.
